(19) Europäisches Patentamt / European Patent Office / Office européen des brevets

(11) **EP 2 343 877 A1**

(12) **EUROPEAN PATENT APPLICATION**
published in accordance with Art. 153(4) EPC

(43) Date of publication:
**13.07.2011 Bulletin 2011/28**

(21) Application number: **08877517.6**

(22) Date of filing: **23.10.2008**

(51) Int Cl.:
**H04N 1/387** (2006.01)

(86) International application number:
**PCT/JP2008/003012**

(87) International publication number:
**WO 2010/046951 (29.04.2010 Gazette 2010/17)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Fujitsu Limited**
**Kawasaki-shi, Kanagawa 211-8588 (JP)**

(72) Inventors:
• **NAKAGATA, Shohei**
  **Kawasaki-shi**
  **Kanagawa 211-8588 (JP)**

• **ANAN, Taizo**
  **Kawasaki-shi**
  **Kanagawa 211-8588 (JP)**
• **KURAKI, Kensuke**
  **Kawasaki-shi**
  **Kanagawa 211-8588 (JP)**
• **TAKAHASHI, Jun**
  **Kawasaki-shi**
  **Kanagawa 211-8588 (JP)**

(74) Representative: **HOFFMANN EITLE**
  **Patent- und Rechtsanwälte**
  **Arabellastraße 4**
  **81925 München (DE)**

(54) **IMAGE ENCRYPTION DEVICE/DECRYPTION DEVICE, IMAGE ENCRYPTION METHOD/ DECRYPTION METHOD, AND IMAGE ENCRYPTION PROGRAM/DECRYPTION PROGRAM**

(57) In the encryption processes, some constraints are imposed on the size of an encryption field. For example, when the numbers of divided blocks in the height and width dimensions are respectively divided by a preset positive integer, the size of an encryption field is restricted such that the remainder will be 0 (i.e., the numbers of divided blocks are multiples of positive integers preset for the respective height and width) or a number equal to or larger than 1. In the decryption processes that correspond to the encryption processes above, the block positions in the encryption field are detected according to the constraint on the number of blocks of the encrypted image. As the numbers of blocks are restricted in advance in the height and width dimensions at the time of performing encryption, the numbers of blocks that need to be taken into consideration can be reduced at the time of detecting the block positions. As a result, the precision of decryption improves.

INPUT IMAGE → ENCRYPTION FIELD SPECIFYING UNIT (101) → IMAGE ENCRYPTION UNIT (102) ← ENCRYPTION KEY → PIXEL VALUE CONVERSION UNIT (103) → ENCRYPTED IMAGE

FIG. 1

EP 2 343 877 A1

**Description**

Technical Field

The present invention relates to a technique of visually encrypting or decrypting a portion of printed matter or a digital image, and in particular, relates to an image encryption and decryption technique for improving the precision of decrypting an encrypted image on printed matter.

Background Art

As society becomes more computerized, the leakage of confidential information has become a serious problem, and the development of techniques to prevent information leakageage is desired. For digital data, for example, techniques have been developed for encrypting data so that the content will not be visible even if the information is obtained by a third party, and some of these techniques are already being utilized for effectively preventing information leakageage.

On the other hand, techniques for preventing information leakage from preprinted matter on paper or the like have not been sufficiently developed, nor is there any commercial product therefor. In fact, it is said that about forty percent of the entire information leakage is from printed matter, and thus the development of a technique to prevent information leakage from printed matter, as was done for digital data, is desired.

Examples in which countermeasures against information leakage from printed matter are required include bills issued when merchandise is purchased, credit card statements, hospital medical records, students' school records, and lists of names. Techniques of encrypting important portions of the above-mentioned examples are desired so as to prevent information leakage.

It is not yet publicly known when the present application was filed, but there is a prior patent application that also relates to the encryption of printed matter, Japanese Laid-open Patent Publication No. 2007-143301 (hereinafter, referred to as "Patent Document 1"), which was filed by the same applicant as the present application. In Patent Document 1, an image field to be encrypted is divided into a number of blocks, and scramble processing is performed on the divided blocks on the basis of a parameter obtained by an input password; then, an image in which the pixel values of a target field are converted and encrypted in an orderly manner is generated. A unique pattern generated in an orderly conversion of pixel values serves as an index that determines the precise positions in the encrypted image at the time of performing decryption, and even if an encrypted image is distorted due to the printing or scanning, highly precise decryption becomes possible by correcting the positions.

Moreover, although not yet publicly known, the inventor of the present application has also developed an applied technique of performing the conversion of pixel values according to Patent Document 1 by using a histogram of the surrounding pixel values. According to this applied technique, even more precise and high-quality decryption of an encrypted image on printed matter becomes possible.

The encryption method and decryption method of Patent Document 1 will be briefly described below.

FIG. 1 illustrates an encryption process procedure according to Patent Document 1.

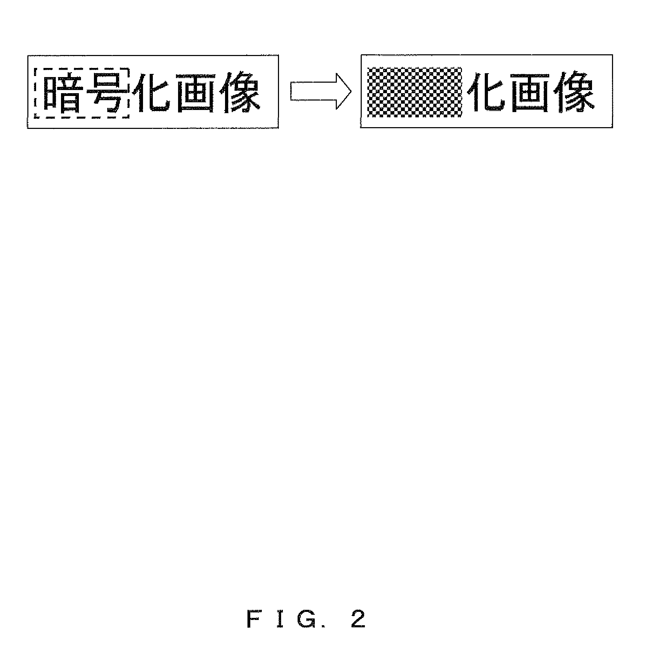

Firstly, the encryption field specifying unit 101 selects a field to be encrypted as illustrated in FIG. 2.

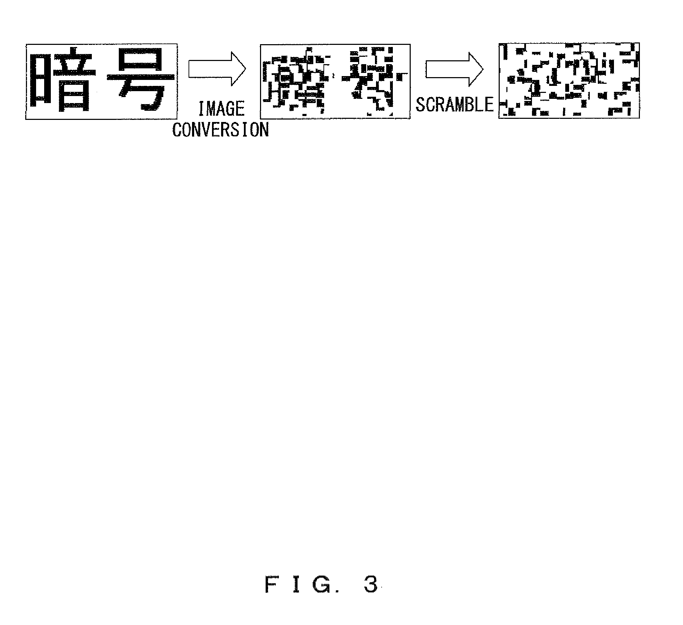

Next, the image encryption unit 102 encrypts the selected image on the basis of an encryption key. FIG. 3 illustrates an example of such encryption in which reversible image conversion is performed on a selected field, and then the selected field is divided into minute fields. Further, shuffling processes (scrambling) are performed on the minute fields according to an encryption key, and an image of the target field is encrypted.

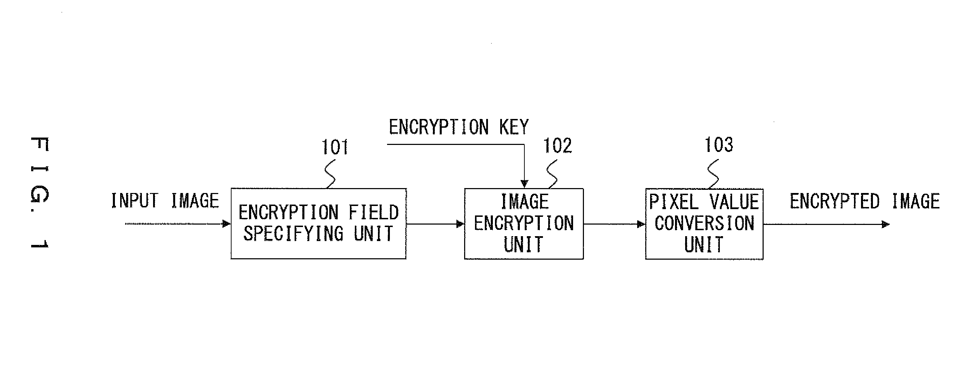

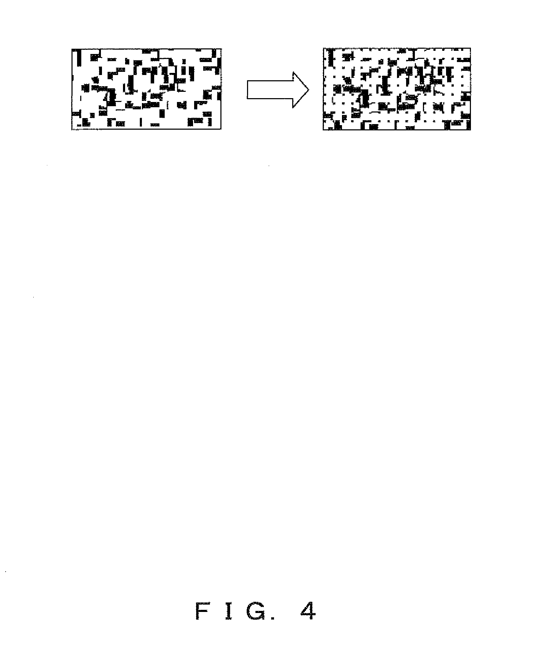

The pixel value conversion unit 103 in FIG. 1 converts the pixel values of the image encrypted by the image encryption unit 102 in an orderly manner. FIG. 4 illustrates an example in which pixel value conversion is performed on the minute fields of the encrypted image at regular intervals in the height and width dimensions. As the pixel values are converted in an orderly manner, a unique pattern is generated in the pixel value conversion. By detecting this unique pattern, the determination of the precise positions in the encryption field becomes easy when an encrypted image is decrypted.

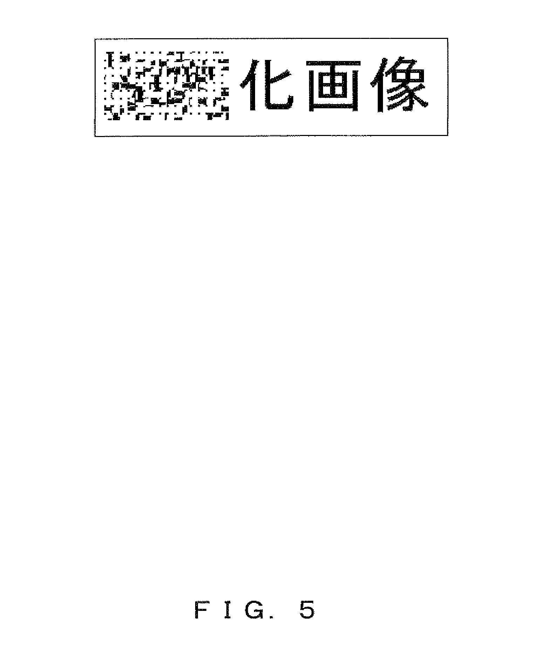

Owing to the processes described above, for example, an encrypted image as in FIG. 5 is obtained.

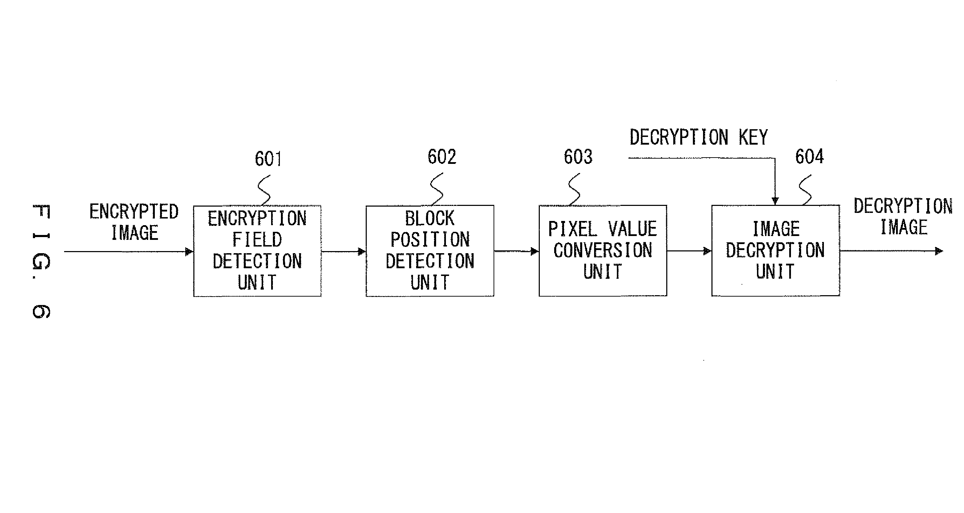

FIG. 6 illustrates the procedures of decrypting an image encrypted by the encryption processes of FIG. 1.

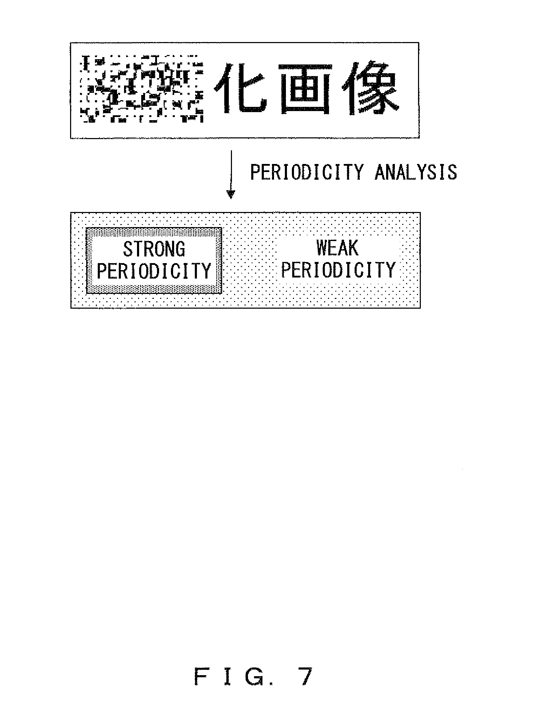

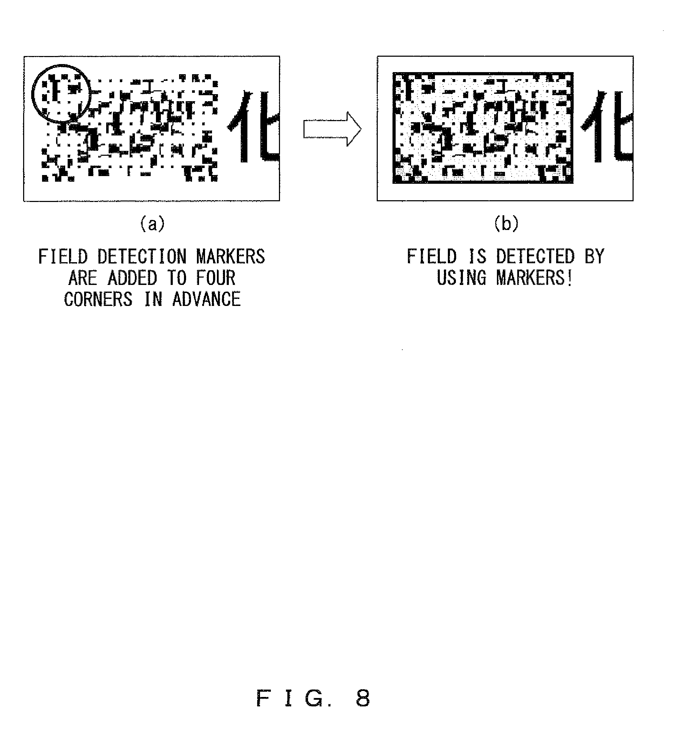

Firstly, an encryption field detection unit 601 performs field detection on an encrypted image. FIG. 7 illustrates an example of a field detection in which the periodicity of dot patterns generated in the pixel value conversion is examined, and a portion at which strong periodicity is detected is specified as an encryption field. FIG. 8 illustrates another example of a field detection in which markers are added to the four corners of an encryption field at the time of performing encryption as illustrated in FIG. 8 (a), and the encryption field is detected from these four markers.

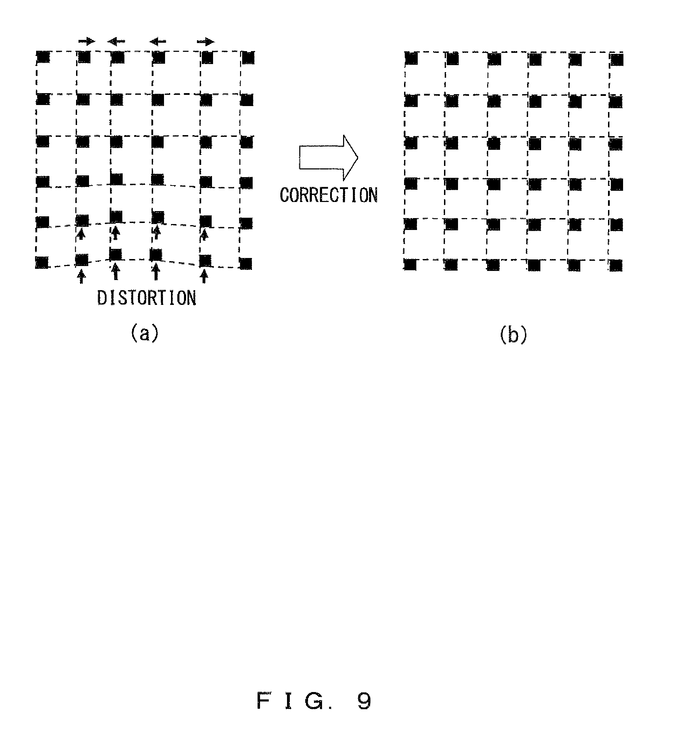

Next, a block position detection unit 602 of FIG. 6 detects the block positions of the scrambled encrypted image by using a pattern of the pixel value conversion which is arranged in a lattice form in the encryption field. As a pattern of the pixel value conversion used for detecting block positions is two-dimensionally arranged, even if an encrypted image is distorted or expanded due to processes such as printing or scanning as illustrated in FIG. 9 (a), the block positions can be precisely detected, and the detected block positions may be corrected as necessary as illustrated in FIG. 9(b).

Further, a pixel value conversion unit 603 of FIG. 6 restores the pixel values of the field on which pixel value conversion is performed by the pixel value conversion unit 103 (FIG. 1) in the encryption processes. Finally, an image decryption unit 604 obtains a decrypted image of the decrypted image by performing inverse conversion processing of the conversion processing by the image encryption unit 102 (FIG. 1) on the decrypted image according to a decryption key.

In the encryption method disclosed in Patent Document 1, there are some cases in which the decryption fails when a printed or scanned encrypted image is complicated or largely distorted. Such a failure is mainly due to the error that the block position detection unit 602 of FIG. 6 detects a wrong number of blocks.

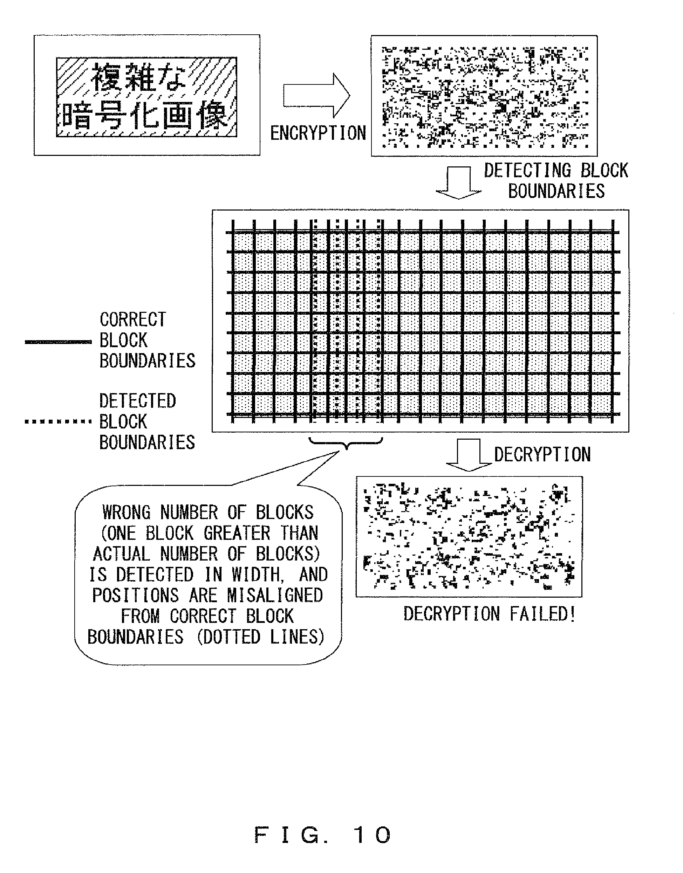

FIG. 10 illustrates such a failure of decryption in which an image to be encrypted is so complicated that a pattern of the pixel value conversion does not clearly appear on an encrypted image, and as a result, the block position detection unit 602 detects a wrong number of blocks which is larger than the actual number of blocks by one block.

Patent Document 1

Japanese Patent Application No. 2007-143301

Disclosure of Invention

It is an object of the present invention to reduce the above-described errors in detecting block positions in the decryption processes, and to improve the precision in the processes of decrypting an encrypted image.

In the first embodiment of encryption processes in view of the object above, some constraints are imposed on the size of an encryption field. For example, when the number of divided blocks in the width and height dimensions are respectively divided by a preset positive integer, the size of an encryption field is restricted such that the remainder will be 0 (i.e., so that the number of divided blocks are multiples of positive integers preset for the respective height and width) or a number equal to or larger than 1.

In the decryption processes that correspond to the encryption processes above, the block positions in the encryption field are detected according to the constraint on the number of blocks of the encrypted image.

As the numbers of blocks are restricted in advance in the width and height dimensions at the time of performing encryption, the numbers of blocks that need to be taken into consideration can be reduced at the time of detecting the block positions. As a result, the precision of decryption improves.

In the second embodiment of encryption processes, the information about the size of an encryption field is added to a specific position outside the encryption field or to the entire image as a code or watermark. Alternatively, the information of the encryption field size may be added as a human-readable value.

In the decryption processes that correspond to the encryption processes above, the information about the size of an encryption field which was embedded at the time of performing encryption is detected, and the detected information is used to detect the block positions.

Accordingly, the numbers of blocks that need to be taken into consideration can be reduced at the time of detecting the block positions. As a result, the precision of decryption improves.

In the third embodiment of encryption processes, the information about the size of an encryption field is transmitted to a server device through the network.

In the decryption processes that correspond to the encryption processes above, the information about the size of an encryption field, which was embedded at the time of performing encryption, is obtained from the server device through the network, and the obtained information is used to detect the block positions.

Accordingly, the numbers of blocks that need to be taken into consideration can be reduced at the time of detecting the block positions. As a result, the precision of decryption improves.

Brief Description of Drawings

FIG. 1 is a diagram illustrating encryption process procedures according to the related art (Patent Document 1).

FIG. 2 is a diagram illustrating an example of how an encryption field is specified according to the related art (Patent Document 1).

FIG. 3 is a diagram illustrating an example of how an image is encrypted according to the related art (Patent Document 1).

FIG. 4 is a diagram illustrating an example of how pixel value conversion is performed according to the related art (Patent Document 1).

FIG. 5 is a diagram illustrating an example of the encrypted image according to the related art (Patent Document 1).

FIG. 6 is a block diagram illustrating the decrypting procedures according to the related art (Patent Document 1).

FIG. 7 is a diagram illustrating an example of how an encryption field is detected according to the related art (Patent Document 1).

FIG. 8 is a diagram illustrating another example of how an encryption field is detected according to the related art (Patent Document 1).

FIG. 9 is a schematic diagram illustrating the processes of detecting distortion or expansion in an encryption field according to the related art (Patent Document 1).

FIG. 10 is a diagram illustrating an example of decryption failure according to the related art (Patent Document 1).

FIG. 11 is a block diagram of encryption process procedures according to the first embodiment.

FIG. 12 is a schematic diagram illustrating an example of the processes performed by an encryption field adjusting unit.

FIG. 13 is a schematic diagram illustrating another example of the processes performed by an encryption field adjusting unit.

FIG. 14 is a diagram illustrating examples of the processes performed by an image encryption unit.

FIG. 15 is an example of the encrypted image in which the numbers of blocks are restricted.

FIG. 16 is a block diagram of decryption process procedures according to the first embodiment.

FIG. 17 is a diagram illustrating examples of detected block boundaries for each number of blocks.

FIG. 18 is a diagram illustrating the distribution of minimum values of objective functions in the detection of block boundaries.

FIG. 19 is a diagram illustrating the differences in the detection of block boundaries between the related art (Patent Document 1) and the first embodiment.

FIG. 20 is an example in which the block positions are correctly detected from a complicated encrypted image.

FIG. 21 is a block diagram of encryption process procedures according to the second embodiment.

FIG. 22 is a diagram illustrating an example in which information about an encryption field size is added into an image.

FIG. 23 is a block diagram of decryption process procedures according to the second embodiment.

FIG. 24 is a diagram illustrating an example in which the information about the encryption field size is detected, and the block positions are detected by using the detected information.

FIG. 25 is a block diagram of encryption process procedures according to the third embodiment.

FIG. 26 is a block diagram of decryption process procedures according to the third embodiment.

FIG. 27 is a diagram illustrating an example of the hardware configuration of a computer capable of implementing the embodiments.

Best Mode of Carrying Out the Invention

Some embodiments of the present invention will be described in detail with reference to the accompanying drawings.

Firstly, encryption processes according to the first embodiment will be described.

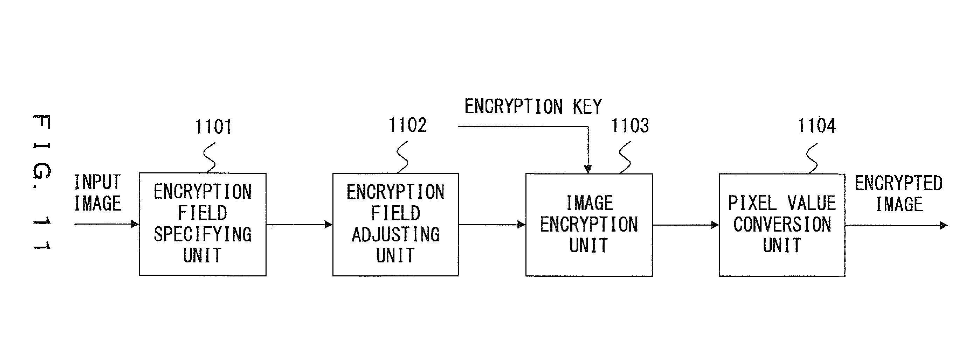

FIG. 11 is a block diagram of encryption process procedures according to the first embodiment. Hereinafter, the processes will be described in sequence.

Firstly, an encryption field specifying unit 1101 selects a field to be encrypted in an object image. This process is similar to that of the encryption field specifying unit 101 in FIG. 1.

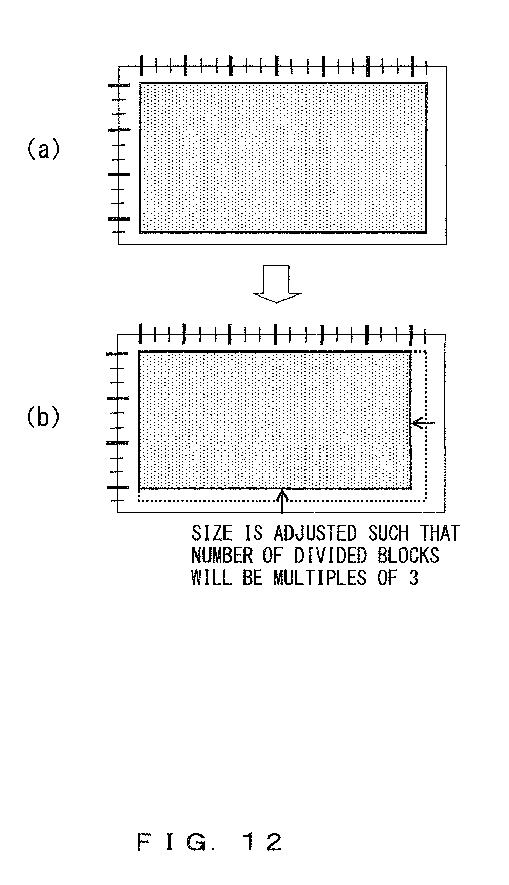

Next, an encryption field adjusting unit 1102 adjusts the width and the height of the encryption field selected by the encryption field specifying unit 1101 under a preset constraint. FIG. 12 illustrates an example in which, when the number of blocks for a later-described image encryption unit 1103 to shuffle the pixels (hereinafter, referred to as "block") are divided by 3, the size of an encryption field is adjusted such that the remainder will be 0 (i.e. , the number of divided blocks is multiples of 3). Each interval of the divisions of a scale in the drawing represents one block size. While the encryption field size of FIG. 12 (a) has 19 blocks in the width dimension and 10 blocks in the height dimension, the size of an encryption field of FIG. 12(b) which is adjusted by the encryption field adjusting unit 1102 has 18 blocks in the width dimension and 9 blocks in the height dimension. It is seen in FIG. 12 (b) that the number of blocks is restricted to multiples of 3.

The above example is generalized as follows.

Supposing that the length, the height, and the block size of the pre-adjusted encryption field are "W", "H", and "B", respectively, and that the number of blocks in an encryption field of the post-adjusted encryption field is a multiple of N, then the width "W'" and the height "H'" of the encryption field that is adjusted by the encryption field adjusting unit 1102 are expressed in the following equations.

$$W' = \mathrm{floor}(W/(BN))*BN \qquad \ldots \ (1)$$

$$H' = \mathrm{floor}(H/(BN))*BN \qquad \ldots \ (2)$$

In these equations, "floor(x)" indicates the largest integer that is equal to or smaller than "x" (for example, floor(4.3)=4, floor (7.0)=7).

The conversion of equations (1) and (2) for the encryption field adjusting unit 1102 are presented by way of example, and other types of size conversion may be applied.

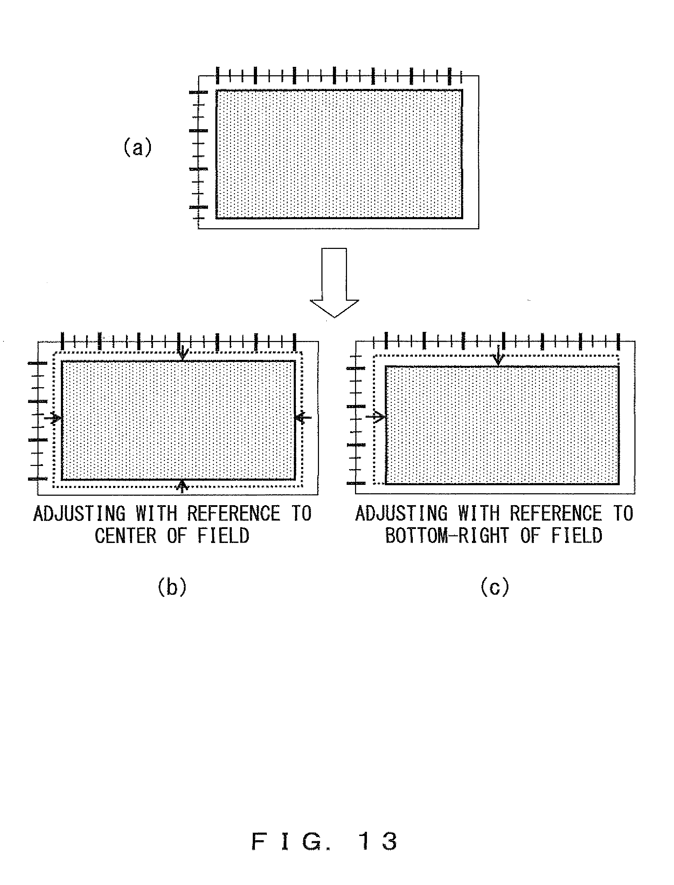

Moreover, the position of the encryption field whose encryption field size is adjusted may be determined with reference to the top-left of the selected encryption field as illustrated in FIG. 12 (b), or may be determined with reference to the center or the bottom-right of the field as illustrated in FIG. 13 (b) or FIG. 13 (c).

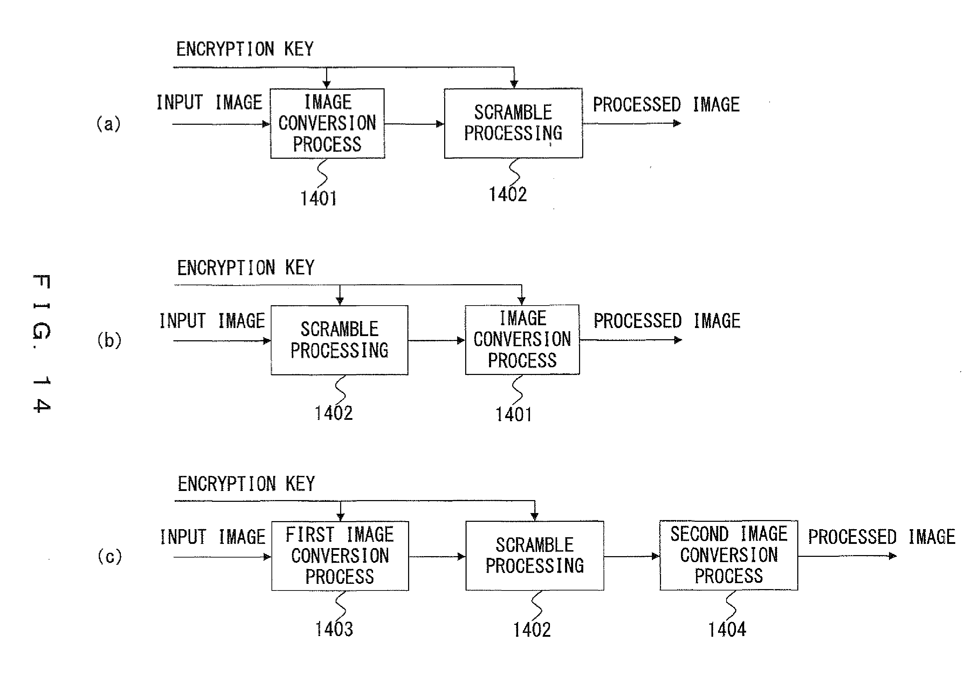

The image of the encryption field specified by the encryption field adjusting unit 1102 is encrypted by an image encryption unit 1103 that follows according to an encryption key. The processes performed by the image encryption unit 1103 are the same as those of the pixel value conversion unit 103 in Fig. 1. These processes are realized by, for example, performing a reversible image conversion process 1401 on a selected field according to an encryption key, and subsequently dividing the converted image into blocks of minute fields and performing scramble processing 1402 of shuffling the minute fields according to the encryption key, as illustrated in FIG. 14(a). As illustrated in FIG. 14(b), the image conversion process 1401 may be performed after the scramble processing 1402. Alternatively, as illustrated in FIG. 14 (c), image conversion processes 1403 and 1404 may be performed before and after the scramble processing.

The image encrypted in the above-described processing is input to the pixel value conversion unit 1104 of FIG. 11. As the processing of the pixel value conversion unit 1104 is the same as that of the pixel value conversion unit 103 of FIG. 1, the description is omitted.

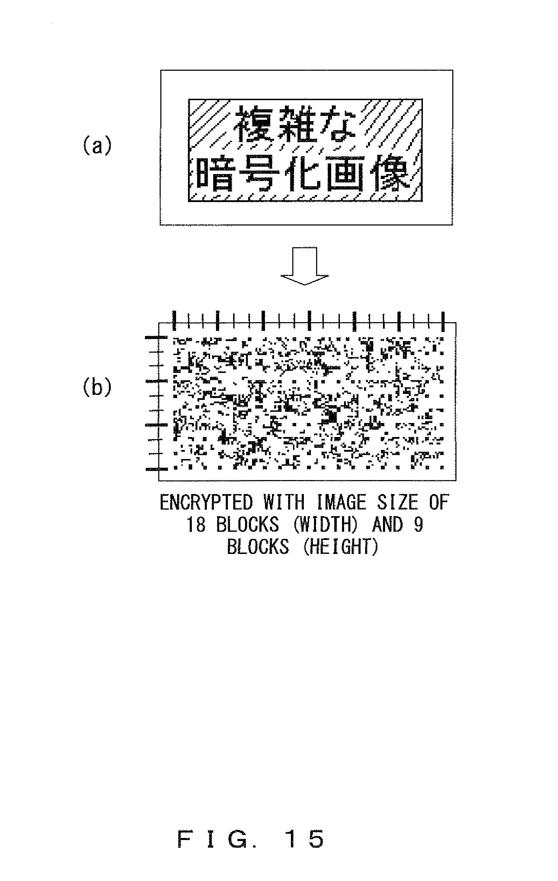

In the series of processing as described above, for example, an encrypted image where the field size is restricted such that the number of blocks is a multiple of 3 is generated from an input image of FIG. 15 (a) as illustrated in FIG. 15 (b) . The encryption processes according to the first embodiment have been described in detail in the above.

Next, the decryption processes according to the first embodiment will be described.

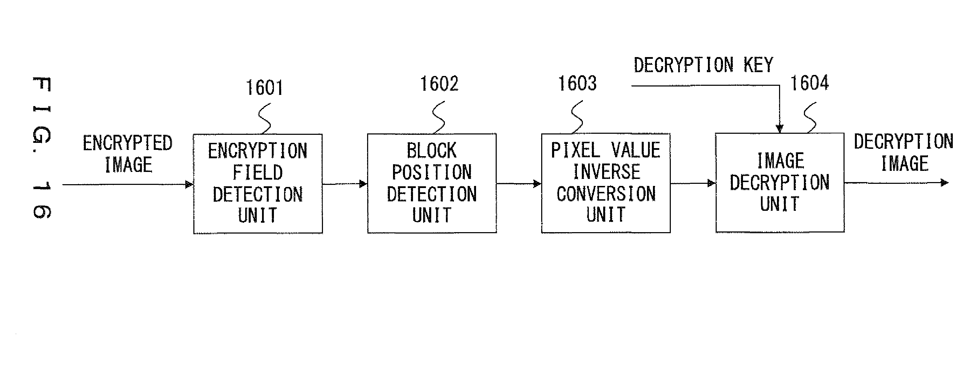

FIG. 16 is a block diagram of decryption process procedures according to the first embodiment. In these decryption processes, the precision is improved in the block position detection unit 602 of FIG. 6, and an encryption field detection unit 1601, a pixel value inverse conversion unit 1603, and an image decryption unit 1604 in the decryption processes of FIG. 16 are similar to the encryption field detection unit 601, the pixel value conversion unit 603, and the image decryption unit 604 of FIG. 6. Accordingly, the descriptions of the processes of these three units are omitted, and the processes of the block position detection unit 1602 of FIG. 16 will be described in comparison with those of FIG. 6.

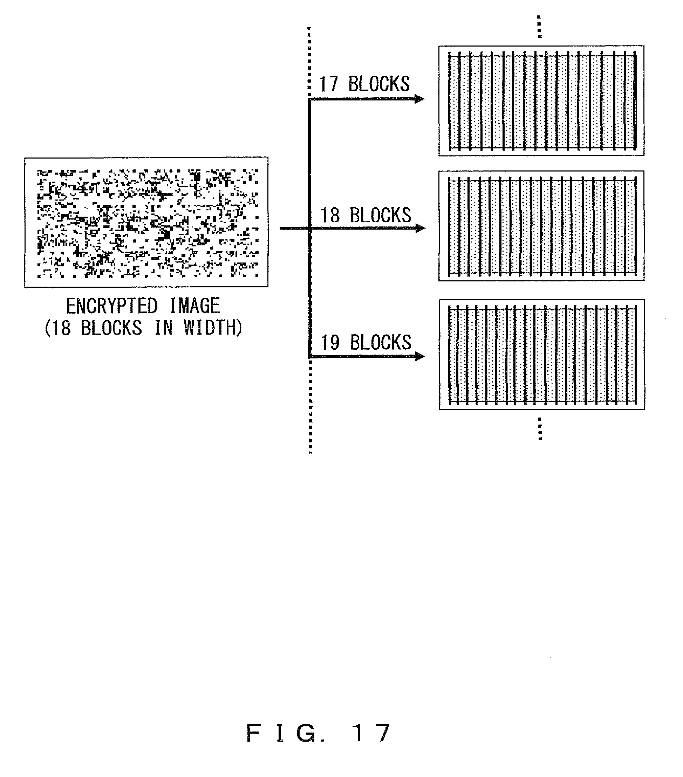

FIG. 17 is a schematic diagram illustrating the results of block boundary detection by the block position detection unit 602 of Fig. 6 in the vertical direction, with the assumption that the number of blocks are 17, 18, and 19, respectively. An optimization problem is defined in view of the periodicity of a pattern of the pixel value conversion, which is arranged in a lattice form in the encrypted image, or in view of the intervals among adjacent block boundaries, and an objective function of the optimization problem above is calculated. The arrangement of block boundaries is determined such that the calculated objective function becomes the smallest.

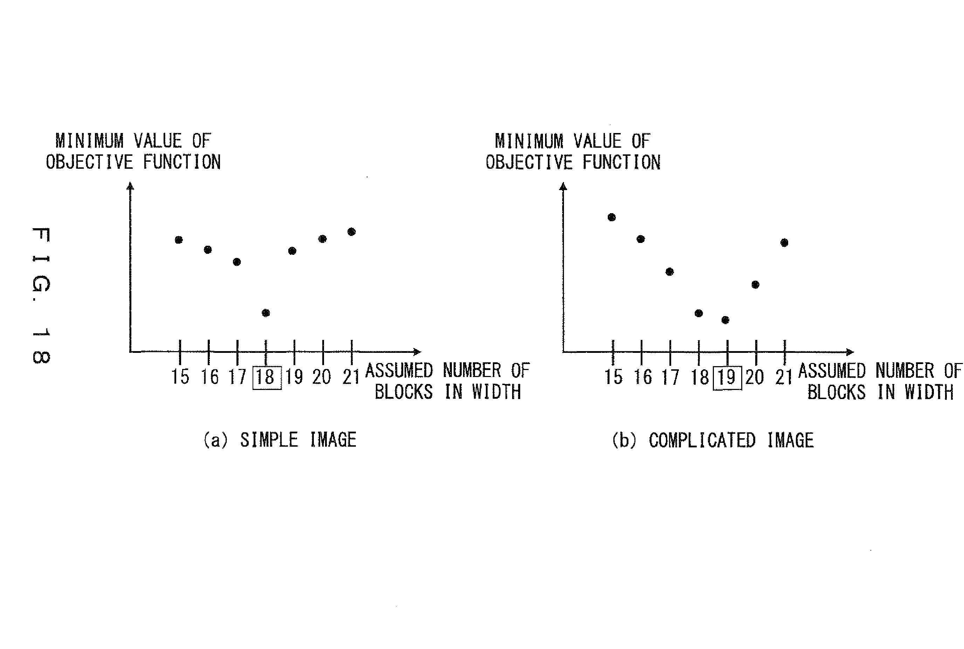

Generally, when the assumed number of blocks is different from the actual number of blocks, the block boundaries cannot be arranged in conformity with each other, and thus the minimum value of an objective function becomes large. On the other hand, when the assumed number of blocks is the same as the actual number of blocks, the block boundaries can be optimally arranged in good conformity with each other, and thus the minimum value of an objective function becomes small. Accordingly, the minimum values of objective functions are distributed as illustrated in FIG. 18 (a), and if the number of blocks in which a value of an objective function becomes the smallest ("18" in FIG. 18 (a)) is selected for the boundary arrangement, the block boundaries can be appropriately detected even if the number of blocks is unknown.

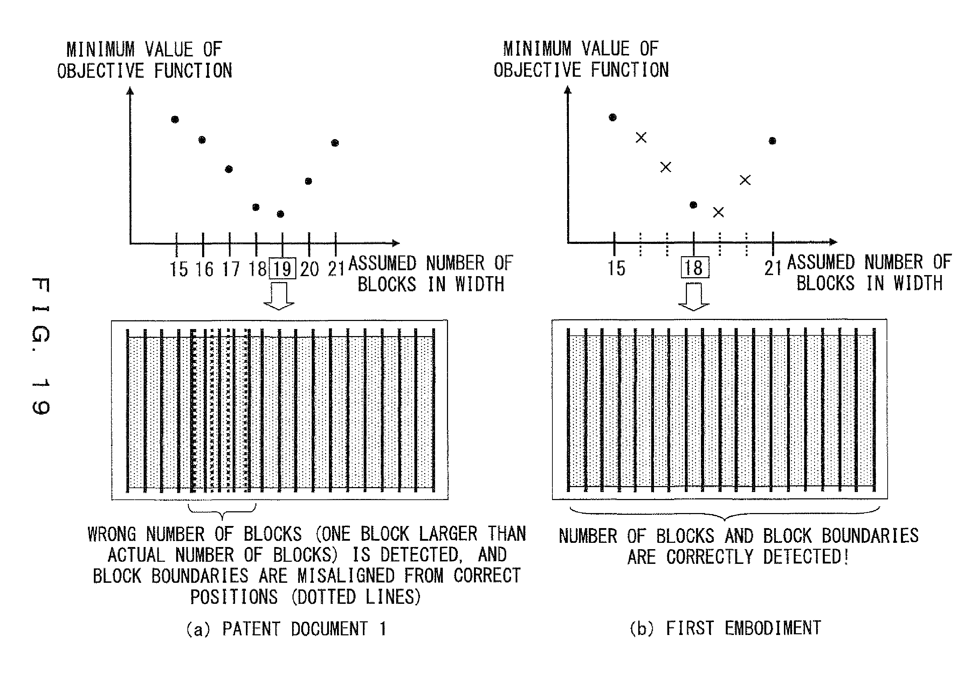

However, when an encrypted image is complicated, as illustrated in FIG. 17, the periodicity of pixel value conversion patterns becomes weak, and thus candidates for the number of blocks and the arrangement may not be appropriately selected. Concerning the detection of block boundaries for each number of blocks in an encrypted image of FIG. 17, the distribution of the minimum values of objective functions are illustrated in FIG. 18 (b). Although the actual number of blocks is 18 in FIG. 18(b), the value is smaller when the number of blocks is 19. Accordingly, a wrong number of blocks is detected as illustrated in FIG. 19(a), and the processes of detecting block boundaries end in failure.

On the other hand, the number of blocks that can be encrypted is restricted in the decryption processes of FIG. 16, and thus the number of blocks to be detected by the block position detection unit 1602 is reduced. As a result, the failures in the detection of the number of blocks, as caused in the block position detection unit 602 of FIG. 6, can be reduced. For example, as the size of the encrypted image of FIG. 17 which is encrypted by the method according to the first embodiment is determined by the blocks of multiples of 3, the candidates for the number of blocks to be considered will be 15, 18, 21, .... Accordingly, while a wrong number of blocks (larger than the actual number of blocks by 1) is detected by the block position detection unit 602 of FIG. 6 as illustrated in FIG. 19(a), the unnecessary candidates for the number of blocks (e.g., 17, 19) can be omitted in advance by the block position detection unit 1602 of FIG. 16 as illustrated in FIG. 19(b), and thereby the correct number of blocks and block boundaries are detected.

The block boundaries in the horizontal direction may be detected by the same method as that for detecting the block boundaries in the vertical direction. On this occasion, the candidates for the number of blocks to be considered can be reduced as the number of blocks of an encryption field in the height is restricted in advance, and thus the precision of the detection of block boundaries in the decryption processes of FIG. 16 improves even more than the decryption processes of FIG. 6.

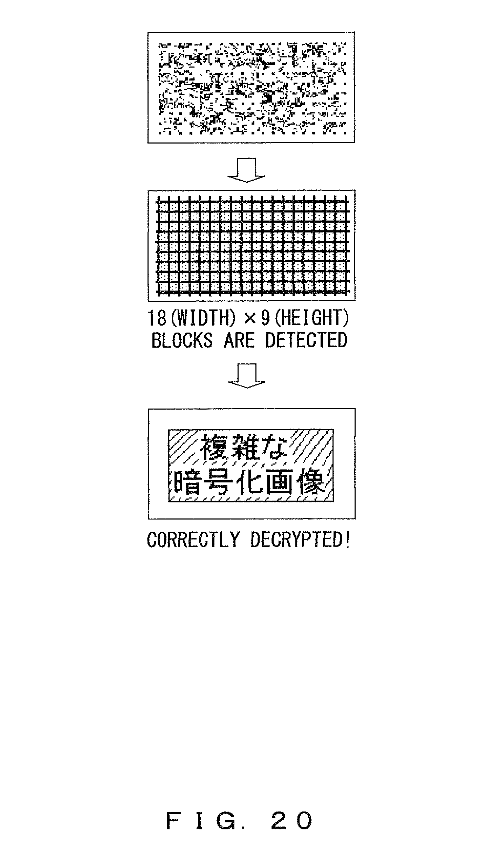

In this case, a complicated encrypted image failed to be decrypted in the processes of FIG. 6; however, the same complicated encrypted image can be correctly decrypted by the above-described processes of the block position detection unit 1602 as illustrated in FIG. 20.

The decryption processes according to the first embodiment have been described in detail in the above.

Next, the encryption processes according to the second embodiment will be described.

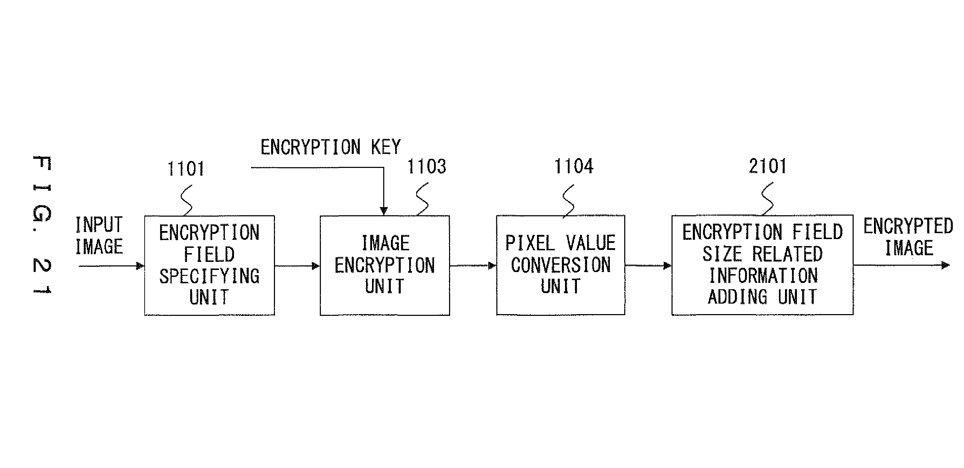

FIG. 21 is a block diagram of encryption process procedures according to the second embodiment. In these processes, the encryption field specifying unit 1101, the image encryption unit 1103, and the pixel value conversion unit 1104 are similar to the encryption processes of the first embodiment in FIG. 11. Accordingly, descriptions of the processes of these three units are omitted. Hereinafter, the processes of an encryption field size related information adding unit 2101 will be described.

The encryption field size related information adding unit 2101 adds the information about the size of an encrypted field to a specific position outside the encryption field or to the entire image. Here, examples of the information about the size of an encryption field which can be added are listed in the following.

(1) Width and height of an encryption field in pixels
(2) Numbers of blocks in the height and width dimensions, where an encryption field is divided into blocks in the scramble processing
(3) Remainder of the calculation in which the numbers of blocks of (2) above in the height and width dimension are divided by a preset positive integer

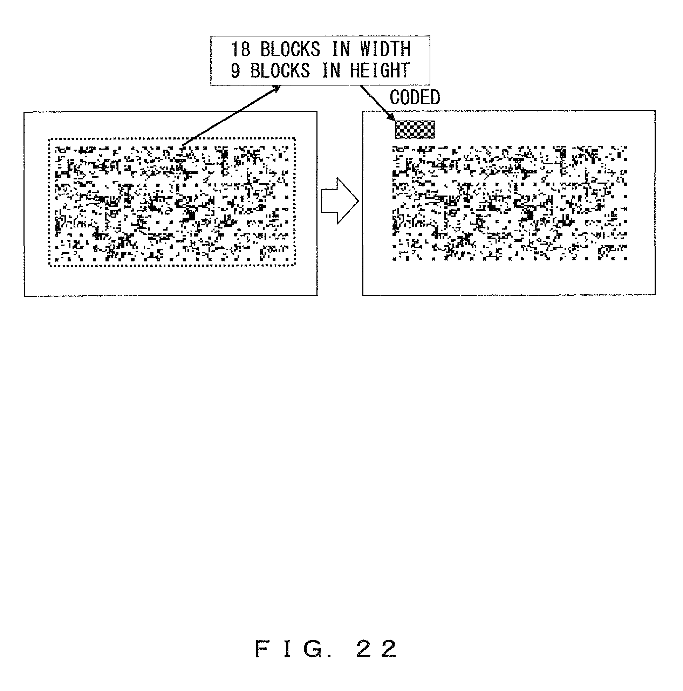

FIG. 22 illustrates an example in which the numbers of blocks of (2) above is added as encryption field size related information, and the numbers of blocks in the height and width dimensions are coded and added to a specific position. A code on which the encryption field size related information is embedded may be any code such as a barcode or a two-dimensional code. Apart from the above-described method of coding the information and adding the coded information to a specific position, it is also possible to adopt a method in which the information is embedded onto the entire image by using a watermark, or a method in which the information is added as a human-readable value.

The encryption processes according to the second embodiment have been described in detail in the above. Next, the decryption processes according to the second embodiment will be described.

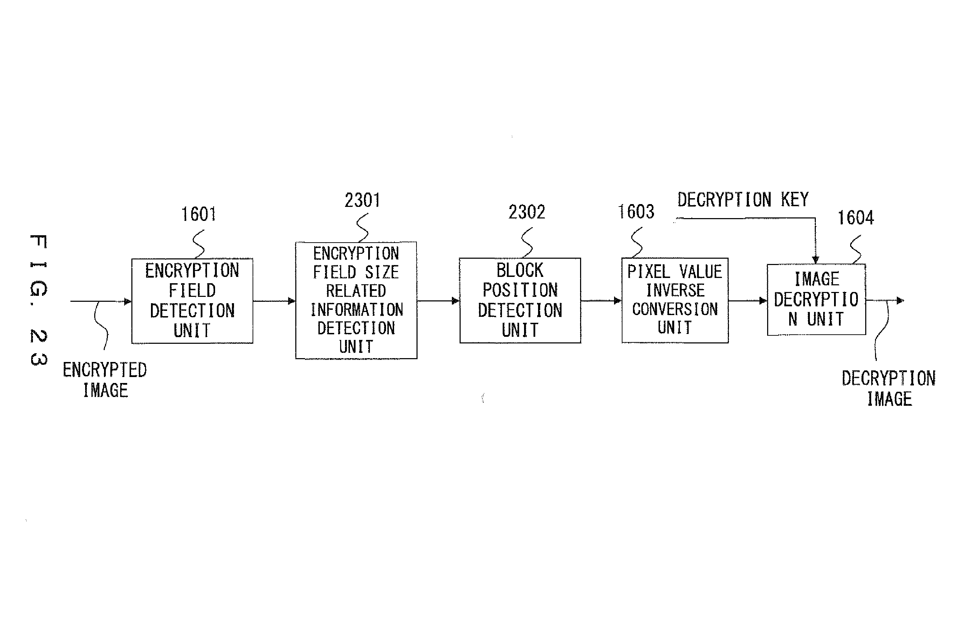

FIG. 23 is a block diagram of decryption process procedures according to the second embodiment. In these decryption processes, the processes performed by the encryption field detection unit 1601, the pixel value inverse conversion unit 1603, and the image decryption unit 1604 are similar to the decryption processes of the first embodiment in FIG. 16. Accordingly, descriptions of the processes of these three units are omitted, and the processes of an encryption field size related information detection unit 2301 and a block position detection unit 2302 will be described below.

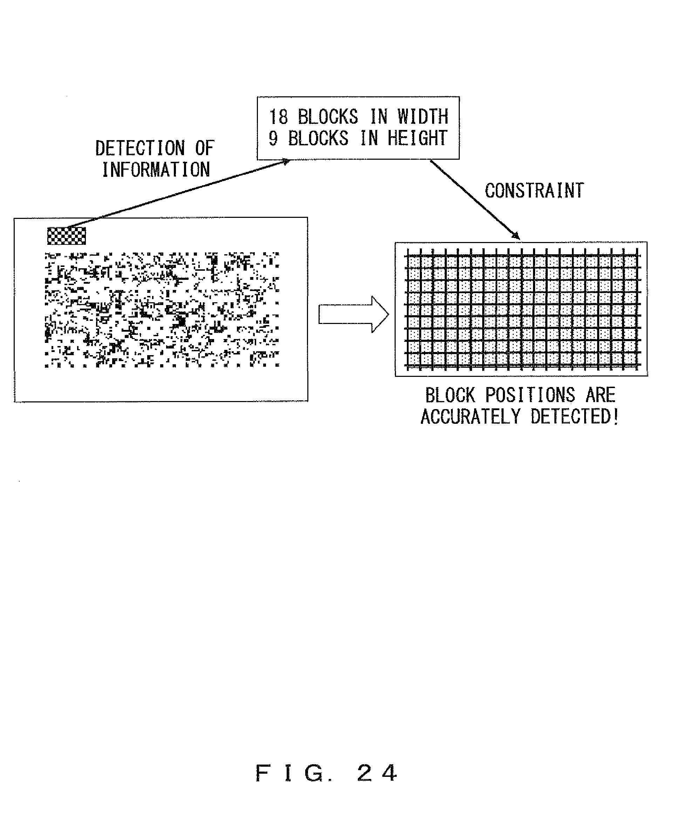

Firstly, the encryption field size related information detection unit 2301 detects the information about the size of an encryption field in the image data. FIG. 24 is presented by way of example, and the numbers of blocks of an encryption field in the height and width dimension are detected from the code which is added to a specific position outside the encryption field. If the size related information is added as a human-readable value, the read value may be manually input.

Next, the block position detection unit 2302 detects the block positions of a scrambled encryption image on the basis of the detected information about the encryption field size, and detects a pattern of the pixel value conversion, which is arranged in a lattice form in the encryption field.

In the decryption processes of FIG. 6, the information about the encryption field size (for example, the number of blocks) is unknown, and thus there are various possibilities that need to be considered when the block positions are detected. Accordingly, the possibility of inaccurately detecting the block positions increases. In the present embodiment, on the other hand, the information about the field size which is detected by the encryption field size related information detection unit 2301 may be used as a constraint, and the possibilities that need to be considered can be reduced when the block positions are detected. Accordingly, the precision of the detection of block positions improves.

In the example of FIG. 24, the information about the number of blocks is detected, and thus the numbers of blocks in the encryption field are known to be 18 in the width dimension and 9 in the height dimension. Accordingly, it is not necessary to consider the other possible numbers of blocks when the block positions are detected, and the possibility of inaccurately detecting the block positions can be reduced.

The decryption processes according to the second embodiment have been described in detail in the above.

Next, the encryption processes according to the third embodiment will be described.

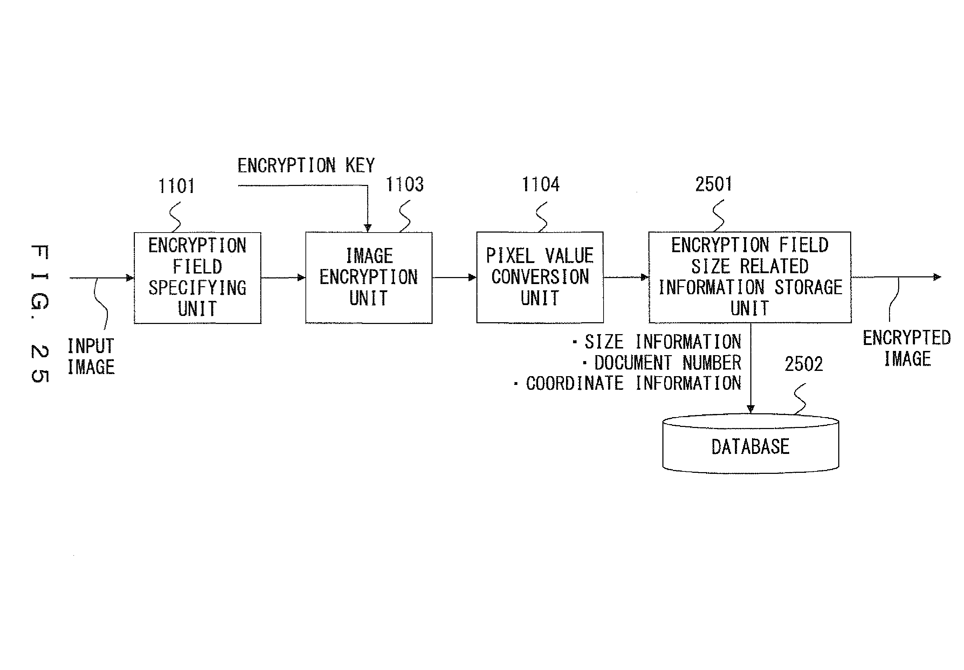

FIG. 25 is a block diagram of encryption process procedures according to the third embodiment. In these decryption processes, the processes performed by the encryption field specifying unit 1101, the image encryption unit 103, and the pixel value conversion unit 1104 are similar to those of the first embodiment in FIG. 16 or the second embodiment in FIG. 21. Accordingly, the descriptions of the processes of these three units are omitted, and the processes of an encryption field size related information storage unit 2501 will be described below.

The encryption field size related information storage unit 2501 transmits the information about the size of an encryption field to a server, and records the transmitted information in a database 2502. In addition to the information about the size of an encryption field, at the same time, the document number of an image in which the encrypted image is included and the coordinate information of an encryption field are also transmitted to a server, and recorded in the database 2502.

In a similar manner as the second embodiment, examples of the information about the size of an encryption field which can be recorded are listed in the following.

(1) Width and height of an encryption field in pixels
(2) Number of blocks in the height and width dimensions where an encryption field is divided into blocks in the scramble processing
(3) Remainder of the calculation in which the numbers of blocks of (2) above in the height and width dimension are divided by a preset positive integer

The information which is recorded in the database 2502 is used in the later-described decryption processes for detecting the block positions in the encryption field.

The encryption processes according to the third embodiment have been described in detail in the above.

Finally, the decryption processes according to the third embodiment will be described.

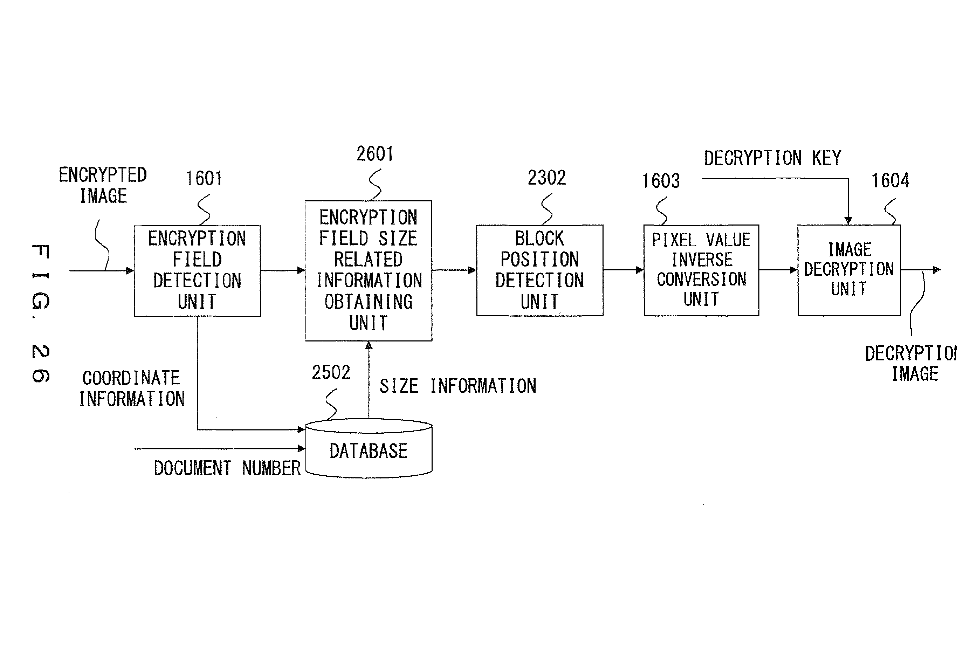

FIG. 26 is a block diagram of decryption process procedures according to the third embodiment. In these decryption processes, the processes performed by the encryption field detection unit 1601, the pixel value inverse conversion unit 1603, and the image decryption unit 1604 are similar to the decryption processes of the first embodiment in FIG. 16 or the second embodiment in FIG. 23. Moreover, the processes performed by the block position detection unit 2302 are similar to those of the decryption processes in the second embodiment of FIG. 23. Accordingly, the descriptions of the processes performed by these units are omitted, and the processes of an encryption field size related information obtaining unit 2601 will be described below.

The encryption field size related information obtaining unit 2601 firstly transmits the document number of an image including the encrypted image and the information about the positions of the detected encryption field to a server in which the encryption field size related information is stored as a database. By receiving the corresponding encryption field size related information from the database 2502 (same as that of FIG. 25) of a server on the basis of transmitted a document number and the coordinate information of the encryption field, the encryption field size related information of an image to be decrypted can be obtained.

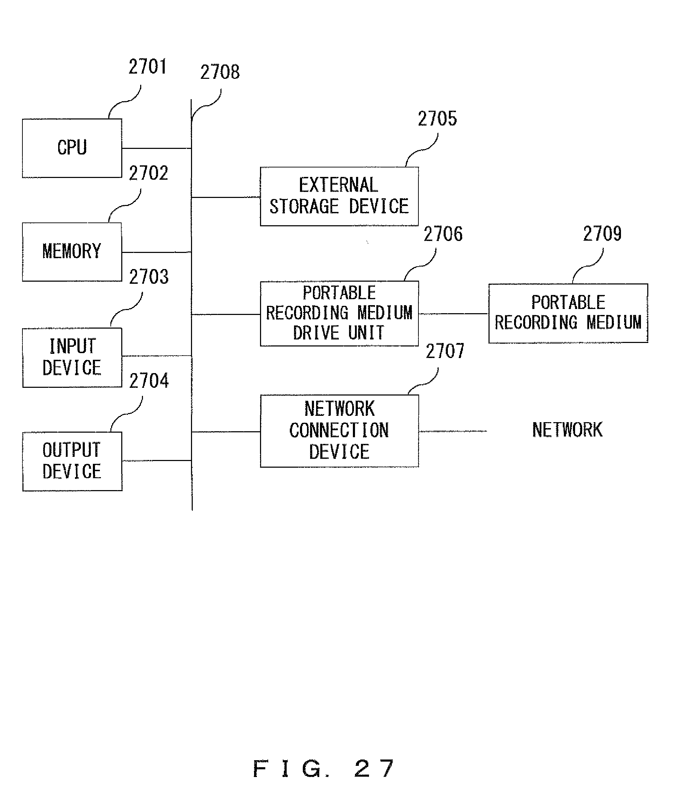

If the block positions are detected on the basis of the obtained encryption field size related information, it is possible to improve the precision of the detection of block positions in a similar manner as the second embodiment. The decryption processes according to the third embodiment have been described in detail in the above. FIG. 27 illustrates an embodiment in which the features of encryption process procedures of FIG. 11, FIG. 21, or FIG. 25 or the features of decryption process procedures of FIG. 16, FIG. 23, or FIG. 26 are realized by executing a program in the computer.

Firstly, if the configuration of FIG. 27 is a computer for performing encryption processes, a CPU (central processing unit) 2701 performs encryption process procedures. Moreover, the encryption process procedures of FIG. 11, FIG. 21, or FIG. 25 are implemented by software, and the software is stored as encryption software in an external storage device 2705 such as a hard disk storage device.

When a user starts up the encryption software, a program is loaded into the memory 2702 via a bus 2708, and the CPU 2701 executes the program that corresponds to each processing unit. The user may scan printed matter by using a scanner which is connected as a part of an input device 2703, and load the scanned printed matter into the memory 2702 via the bus 2708. Alternatively, the user may perform the encryption processes by loading the document data stored in the external storage device 2705 into the memory 2702 via the bus 2708.

While watching a display that is connected as a part of an output device 2704, the user performs the encryption process procedures by manipulating a mouse or a keyboard that is connected as a part of the input device 2703 to select a field to be encrypted and input a password.

The encrypted image may be printed by a printer that is connected as a part of the output device 2704, or may be stored in the external storage device 2705 or in the portable recording medium 2709 that is connected via the portable recording medium drive unit 2706. Alternatively, the decrypted image may be sent to a network via the network connection device 2707.

The database 2502 of FIG. 25 is implemented in a server device (not illustrated) that is connected from the network connection device 2707 through a network such as the internet.

Secondly, if the configuration of FIG. 27 is a computer for performing decryption processes, the CPU 2701 performs decryption process procedures. Moreover, the decryption process procedures of FIG. 16, FIG. 23, or FIG. 26 are implemented by software, and the software is stored as encryption software in the external storage device 2705 such as a hard disk storage device.

When a user starts up the decryption software, a program is loaded into the memory 2702 via the bus 2708, and the CPU 2701 executes the program that corresponds to each processing unit. The user may scan printed matter by using a scanner which is connected as a part of the input device 2703, and load the scanned printed matter into the memory 2702 via the bus 2708. Alternatively, the user may perform the decryption processes by loading the document data stored in the external storage device 2705 into the memory 2702 via the bus 2708.

When an image to be decrypted is loaded into the memory 2702 while a display that is connected as a part of an output device 2704 is watched, the user decrypts the encryption field by manipulating a mouse or a keyboard that is connected as a part of the input device 2703 to select a field to be decrypted and input a password.

The decrypted image may be printed by a printer that is connected as a part of the output device 2704, or may be stored in the external storage device 2705 or in the portable recording medium 2709 that is connected via the portable recording medium drive unit 2706. Alternatively, the decrypted image may be sent to a network via the network connection device 2707.

The database 2502 of FIG. 26 is implemented in a server device (not illustrated) that is connected from the network connection device 2707 through a network such as the internet.

## Claims

1.  An image encryption device for encrypting image data into an encrypted image, the image encryption device comprising:

    an encryption field specifying unit to specify a partial field to be encrypted as a specified encryption field in the image data;
    an encryption field adjusting unit to adjust a size of the specified encryption field under a preset constraint;
    an image encryption unit to encrypt an image in the specified encryption field using an encryption key; and
    a pixel value conversion unit to perform pixel value conversion on a predetermined position in the specified encryption field.

2.  The image encryption device according to claim 1, wherein
    when a height and a width of an encryption field are respectively divided by preset positive integers, the encryption field adjusting unit adjusts an encryption field size such that a remainder will be 0 or a number equal to or larger than 1.

3.  An image encryption device for encrypting image data into an encrypted image, the image encryption device comprising:

    an encryption field specifying unit to specify a partial field to be encrypted as a specified encryption field in the image data;
    an image encryption unit to encrypt an image in the specified encryption field using an encryption key;
    a pixel value conversion unit to perform pixel value conversion on a predetermined position in the specified encryption field; and
    an encryption field size related information adding unit to add information related to a size of the specified encryption field to a specific position outside the specified encryption field or to an entire image.

4.  The image encryption device according to claim 3, wherein
    the encryption field size related information adding unit adds information related to a size of the specified encryption field as a detectable barcode or a two-dimensional code, a coded watermark, or as a human-readable value.

5. An image encryption device for encrypting image data into an encrypted image, the image encryption device comprising:

an encryption field specifying unit to specify a partial field to be encrypted as a specified encryption field in the image data;
an image encryption unit to encrypt an image in the specified encryption field using an encryption key;
a pixel value conversion unit to perform pixel value conversion on a predetermined position in the specified encryption field; and
an encryption field size related information storage unit to transmit information related to a size of the specified encryption field to a server device connected through a network.

6. An image decryption device for decrypting into a digital image encrypted image data encrypted by the image encryption device according to claim 1 or 2, the image decryption device comprising:

an encryption field detection unit to detect an encryption field in the encrypted image data;
a position detection unit to detect a detailed block position in the encryption field according to a pattern obtained by an encryption field adjusting unit and a pixel value conversion unit when an encryption process is performed on the encrypted image data;
a pixel value inverse conversion unit to perform a preset pixel value inverse conversion on the encrypted image data according to the block position; and
an image decryption unit to decrypt the encrypted image data on which the pixel value inverse conversion is performed by using a decryption key.

7. An image decryption device for decrypting into a digital image encrypted image data encrypted by the image encryption device according to claim 3 or 4, the image decryption device comprising:

an encryption field detection unit to detect an encryption field in the encrypted image data;
an encryption field size related information detection unit to detect information about a size of the encryption field in the encrypted image data;
a position detection unit to detect a detailed block position in the encryption field according to information about a size of the encryption field and a pattern obtained by a pixel value conversion unit when an encryption process is performed; and
a pixel value inverse conversion unit to perform a preset pixel value inverse conversion on the encrypted image data according to the block position; and
an image decryption unit to decrypt the encrypted image data on which the pixel value inverse conversion is performed by using a decryption key.

8. An image decryption device for decrypting into a digital image encrypted image data encrypted by the image encryption device according to claim 5, the image decryption device comprising:

an encryption field detection unit to detect an encryption field in the encrypted image data;
an encryption field size related information obtaining unit to obtain information about a size of the encryption field from a server device connected through a network;
a position detection unit to detect a detailed block position in the encryption field according to the obtained encryption field size related information and to detect a pattern obtained by a pixel value conversion unit when an encryption process is performed;
a pixel value inverse conversion unit to perform a preset pixel value inverse conversion on the encrypted image data according to the block position; and
an image decryption unit to decrypt the encrypted image data on which the pixel value inverse conversion is performed by using a decryption key.

9. A method for encrypting image data into an encrypted image, the method comprising:

specifying a partial field to be encrypted as a specified encryption field in the image data;
adjusting a size of the specified encryption field under a preset constraint;
encrypting an image in the specified encryption field using an encryption key; and

performing pixel value conversion on a predetermined position in the specified encryption field.

10. The method according to claim 9, wherein
when a height and a width of an encryption field are respectively divided by preset positive integers, in the adjusting a size of the specified encryption field an encryption field size is adjusted such that a remainder will be 0 or a number equal to or larger than 1.

11. A method for encrypting image data into an encrypted image, the method comprising:

specifying a partial field to be encrypted as a specified encryption field in the image data;
encrypting an image in the specified encryption field using an encryption key;
performing pixel value conversion on a predetermined position in the specified encryption field; and
adding information related to a size of the specified encryption field to a specific position outside the specified encryption field or to an entire image.

12. The method according to claim 11, wherein
the adding information related to a size of the specified encryption field adds information related to a size of the specified encryption field as a detectable barcode or a two-dimensional code, a coded watermark, or as a human-readable value.

13. A method for encrypting image data into an encrypted image, the method comprising:

specifying a partial field to be encrypted as a specified encryption field in the image data;
encrypting an image in the specified encryption field using an encryption key;
performing pixel value conversion on a predetermined position in the specified encryption field; and
transmitting information related to a size of the specified encryption field to a server method connected through a network.

14. A method for decrypting into a digital image encrypted image data encrypted by the image encryption device according to claim 1 or 2, or by the method according to claim 9 or 10, the method comprising:

detecting an encryption field in the encrypted image data;
detecting a detailed block position in the encryption field according to a pattern obtained by adjusting an encryption field and converting a pixel value when an encryption process is performed on the encrypted image data;
performing a preset pixel value inverse conversion on the encrypted image data according to the block position; and
decrypting the encrypted image data on which the pixel value inverse conversion is performed by using a decryption key.

15. A method for decrypting into a digital image an encrypted image data encrypted by the image encryption device according to claim 3 or 4, or by the method according to claim 11 or 12, the method comprising:

detecting an encryption field in the encrypted image data;
detecting information about a size of the encryption field in the encrypted image data;
detecting a detailed block position in the encryption field according to information about a size of the encryption field and a pattern obtained by converting a pixel value when an encryption process is performed;
performing a preset pixel value inverse conversion on the encrypted image data according to the block position; and
decrypting the encrypted image data on which the pixel value inverse conversion is performed by using a decryption key.

16. A method for decrypting into a digital image encrypted image data encrypted by the image encryption device according to claim 5, or by the method according to claim 13, the method comprising:

detecting an encryption field in the encrypted image data;
obtaining information about a size of the encryption field from a server method connected through a network;
detecting a detailed block position in the encryption field according to the obtained encryption field size related information and a pattern obtained by converting a pixel value when an encryption process is performed;

performing a preset pixel value inverse conversion on the encrypted image data according to the block position; and

decrypting the encrypted image data on which the pixel value inverse conversion is performed by using a decryption key.

17. A program executed in a computer for encrypting image data into an encrypted image, the program comprising functions of:

specifying a partial field to be encrypted as a specified encryption field in the image data;
adjusting a size of the specified encryption field under a preset constraint;
encrypting an image in the specified encryption field using an encryption key; and
performing pixel value conversion on a predetermined position in the specified encryption field.

18. The program according to claim 17, wherein
when a height and a width of an encryption field are respectively divided by preset positive integers, in the adjusting a size of the specified encryption field an encryption field size is adjusted such that a remainder will be 0 or a number equal to or larger than 1.

19. A program executed in a computer for encrypting image data into an encrypted image, the program comprising functions of:

specifying a partial field to be encrypted as a specified encryption field in the image data;
encrypting an image in the specified encryption field using an encryption key;
performing pixel value conversion on a predetermined position in the specified encryption field; and
adding information related to a size of the specified encryption field to a specific position outside the specified encryption field or to an entire image.

20. The program according to claim 19, wherein
the adding information related to a size of the specified encryption field adds information related to a size of the specified encryption field as a detectable barcode or a two-dimensional code, a coded watermark, or as a human-readable value.

21. A program executed in a computer for encrypting an image data into an encrypted image, the program comprising functions of:

specifying a partial field to be encrypted as a specified encryption field in the image data;
encrypting an image in the specified encryption field using an encryption key;
performing pixel value conversion on a predetermined position in the specified encryption field; and
transmitting information related to a size of the specified encryption field to a server device connected through a network.

22. A program executed in a computer for decrypting into a digital image encrypted image data encrypted by the image encryption device according to claim 1 or 2, the method according to claim 9 or 10, or by the program according to claim 17 or 18, the program comprising functions of:

detecting an encryption field in the encrypted image data;
detecting a detailed block position in the encryption field according to a pattern obtained by adjusting an encryption field and converting a pixel value when an encryption process is performed on the encrypted image data;
performing a preset pixel value inverse conversion on the encrypted image data according to the block position; and
decrypting the encrypted image data on which the pixel value inverse conversion is performed by using a decryption key.

23. A program executed in a computer for decrypting into a digital image encrypted image data encrypted by the image encryption device according to claim 3 or 4, the method according to claim 11 or 12, or by the program according to claim 19 or 20, the program comprising functions of:

detecting an encryption field in the encrypted image data;

detecting information about a size of the encryption field in the encrypted image data;

detecting a detailed block position in the encryption field according to information about a size of the encryption field and a pattern obtained by converting a pixel value when an encryption process is performed;

performing a preset pixel value inverse conversion on the encrypted image data according to the block position; and

decrypting the encrypted image data on which the pixel value inverse conversion is performed by using a decryption key.

24. A program executed in a computer for decrypting into a digital image encrypted image data encrypted by the image encryption device according to claim 5, the method according to claim 13, or by the program according to claim 21, the program comprising functions of:

detecting an encryption field in the encrypted image data;

obtaining information about a size of the encryption field from a server method connected through a network;

detecting a detailed block position in the encryption field according to the obtained encryption field size related information and a pattern obtained by converting a pixel value when an encryption process is performed;

performing a preset pixel value inverse conversion on the encrypted image data according to the block position; and

decrypting the encrypted image data on which the pixel value inverse conversion is performed by using a decryption key.

F I G. 1

INPUT IMAGE →

101

ENCRYPTION FIELD
SPECIFYING UNIT

ENCRYPTION KEY

102

IMAGE
ENCRYPTION
UNIT

103

PIXEL VALUE
CONVERSION
UNIT

→ ENCRYPTED IMAGE

暗号化画像 ⟹ 　化画像

FIG. 2

IMAGE CONVERSION

SCRAMBLE

FIG. 3

F I G. 4

F I G. 5

ENCRYPTED
IMAGE →

601 — ENCRYPTION
FIELD
DETECTION
UNIT →

602 — BLOCK
POSITION
DETECTION
UNIT →

603 — PIXEL VALUE
CONVERSION
UNIT →

DECRYPTION KEY →

604 — IMAGE
DECRYPTION
UNIT →

DECRYPTION
IMAGE

F I G. 6

化画像

PERIODICITY ANALYSIS

STRONG PERIODICITY | WEAK PERIODICITY

F I G. 7

(a)

FIELD DETECTION MARKERS
ARE ADDED TO FOUR
CORNERS IN ADVANCE

(b)

FIELD IS DETECTED BY
USING MARKERS!

F I G. 8

CORRECTION

DISTORTION

(a)

(b)

F I G. 9

ENCRYPTION

DETECTING BLOCK
BOUNDARIES

CORRECT
BLOCK
BOUNDARIES

DETECTED
BLOCK
BOUNDARIES

WRONG NUMBER OF BLOCKS
(ONE BLOCK GREATER THAN
ACTUAL NUMBER OF BLOCKS)
IS DETECTED IN WIDTH, AND
POSITIONS ARE MISALIGNED
FROM CORRECT BLOCK
BOUNDARIES (DOTTED LINES)

DECRYPTION

DECRYPTION FAILED!

F I G. 1 0

FIG. 11

INPUT IMAGE →

ENCRYPTION FIELD SPECIFYING UNIT
1101

→

ENCRYPTION FIELD ADJUSTING UNIT
1102

→

ENCRYPTION KEY

IMAGE ENCRYPTION UNIT
1103

→

PIXEL VALUE CONVERSION UNIT
1104

→ ENCRYPTED IMAGE

EP 2 343 877 A1

23

(a)

(b)

SIZE IS ADJUSTED SUCH THAT
NUMBER OF DIVIDED BLOCKS
WILL BE MULTIPLES OF 3

F I G. 1 2

(a)

(b)

ADJUSTING WITH REFERENCE TO
CENTER OF FIELD

(c)

ADJUSTING WITH REFERENCE TO
BOTTOM-RIGHT OF FIELD

F I G. 1 3

EP 2 343 877 A1

F I G. 1 4

(a)

ENCRYPTION KEY

INPUT IMAGE → IMAGE CONVERSION PROCESS → SCRAMBLE PROCESSING → PROCESSED IMAGE

1401　　　1402

(b)

ENCRYPTION KEY

INPUT IMAGE → SCRAMBLE PROCESSING → IMAGE CONVERSION PROCESS → PROCESSED IMAGE

1402　　　1401

(c)

ENCRYPTION KEY

INPUT IMAGE → FIRST IMAGE CONVERSION PROCESS → SCRAMBLE PROCESSING → SECOND IMAGE CONVERSION PROCESS → PROCESSED IMAGE

1403　　　1402　　　1404

(a)

(b)

ENCRYPTED WITH IMAGE SIZE OF
18 BLOCKS (WIDTH) AND 9
BLOCKS (HEIGHT)

F I G. 1 5

EP 2 343 877 A1

ENCRYPTED IMAGE → ENCRYPTION FIELD DETECTION UNIT (1601) → BLOCK POSITION DETECTION UNIT (1602) → PIXEL VALUE INVERSE CONVERSION UNIT (1603) → IMAGE DECRYPTION UNIT (1604) → DECRYPTION IMAGE

DECRYPTION KEY → IMAGE DECRYPTION UNIT

F I G. 1 6

28

ENCRYPTED IMAGE
(18 BLOCKS IN WIDTH)

17 BLOCKS

18 BLOCKS

19 BLOCKS

F I G.  1 7

MINIMUM VALUE OF
OBJECTIVE FUNCTION

15 16 17 [18] 19 20 21 ASSUMED NUMBER OF
BLOCKS IN WIDTH

(a) SIMPLE IMAGE

MINIMUM VALUE OF
OBJECTIVE FUNCTION

15 16 17 18 [19] 20 21 ASSUMED NUMBER OF
BLOCKS IN WIDTH

(b) COMPLICATED IMAGE

F I G. 1 8

MINIMUM VALUE OF
OBJECTIVE FUNCTION

15 16 17 18 19 20 21 ASSUMED NUMBER OF
BLOCKS IN WIDTH

WRONG NUMBER OF BLOCKS (ONE BLOCK LARGER THAN
ACTUAL NUMBER OF BLOCKS) IS DETECTED, AND
BLOCK BOUNDARIES ARE MISALIGNED FROM CORRECT
POSITIONS (DOTTED LINES)

(a) PATENT DOCUMENT 1

MINIMUM VALUE OF
OBJECTIVE FUNCTION

15 18 21 ASSUMED NUMBER OF
BLOCKS IN WIDTH

NUMBER OF BLOCKS AND BLOCK BOUNDARIES
ARE CORRECTLY DETECTED!

(b) FIRST EMBODIMENT

F I G. 1 9

EP 2 343 877 A1

18(WIDTH) × 9(HEIGHT)
BLOCKS ARE DETECTED

CORRECTLY DECRYPTED!

F I G. 2 0

F I G. 2 1

INPUT
IMAGE →

1101
ENCRYPTION
FIELD
SPECIFYING
UNIT

ENCRYPTION KEY

1103
IMAGE
ENCRYPTION
UNIT

1104
PIXEL VALUE
CONVERSION
UNIT

2101
ENCRYPTION FIELD
SIZE RELATED
INFORMATION
ADDING UNIT

→ ENCRYPTED
IMAGE

18 BLOCKS IN WIDTH
9 BLOCKS IN HEIGHT

CODED

F I G. 2 2

F I G. 2 3

ENCRYPTED IMAGE →

1601 ENCRYPTION FIELD DETECTION UNIT

2301 ENCRYPTION FIELD SIZE RELATED INFORMATION DETECTION UNIT

2302 BLOCK POSITION DETECTION UNIT

1603 PIXEL VALUE INVERSE CONVERSION UNIT

DECRYPTION KEY

1604 IMAGE DECRYPTION UNIT → DECRYPTION IMAGE

DETECTION OF
INFORMATION

18 BLOCKS IN WIDTH
9 BLOCKS IN HEIGHT

CONSTRAINT

BLOCK POSITIONS ARE
ACCURATELY DETECTED!

F I G. 2 4

F I G. 2 5

INPUT
IMAGE

ENCRYPTION KEY

1101
ENCRYPTION
FIELD
SPECIFYING
UNIT

1103
IMAGE
ENCRYPTION
UNIT

1104
PIXEL VALUE
CONVERSION
UNIT

2501
ENCRYPTION FIELD
SIZE RELATED
INFORMATION STORAGE
UNIT

ENCRYPTED
IMAGE

· SIZE INFORMATION
· DOCUMENT NUMBER
· COORDINATE INFORMATION

2502

DATABASE

FIG. 26

ENCRYPTED IMAGE → ENCRYPTION FIELD DETECTION UNIT (1601)

ENCRYPTION FIELD SIZE RELATED INFORMATION OBTAINING UNIT (2601)

BLOCK POSITION DETECTION UNIT (2302)

PIXEL VALUE INVERSE CONVERSION UNIT (1603)

IMAGE DECRYPTION UNIT (1604)

DECRYPTION IMAGE

DECRYPTION KEY

COORDINATE INFORMATION

SIZE INFORMATION

DATABASE (2502)

DOCUMENT NUMBER

F I G. 2 7

## INTERNATIONAL SEARCH REPORT

| | International application No. |
|---|---|
| | PCT/JP2008/003012 |

A. CLASSIFICATION OF SUBJECT MATTER
*H04N1/387(2006.01)i*

According to International Patent Classification (IPC) or to both national classification and IPC

B. FIELDS SEARCHED

Minimum documentation searched (classification system followed by classification symbols)
H04N1/387

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2008/053576 A1 (Fujitsu Ltd.), 08 May, 2008 (08.05.08), Columns 31 to 76; Figs. 3, 16 & WO 2008/053545 A1 | 1,2,6,9,10, 14,17,18,22 |
| A | JP 2001-155466 A (Toshiba Corp.), 08 June, 2001 (08.06.01), Column 323 & US 7167635 B1 | 1,2,6,9,10, 14,17,18,22 |

|☒| Further documents are listed in the continuation of Box C. | | See patent family annex. |
|---|---|---|---|

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 14 January, 2009 (14.01.09) | 27 January, 2009 (27.01.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

| | INTERNATIONAL SEARCH REPORT | International application No. |
|---|---|---|
| | | PCT/JP2008/003012 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-50056 A  (Matsushita Electric Industrial Co., Ltd.), 18 February, 2000 (18.02.00), Full text; Figs. 1 to 5 & US 6798922 B1        & EP 1102475 A1 & WO 2000/007359 A1     & AU 4931499 A & TW 425814 B          & CA 2339152 A & AU 759459 B          & CN 1310912 A | 1,2,6,9,10, 14,17,18,22 |

Form PCT/ISA/210 (continuation of second sheet) (April 2007)

## INTERNATIONAL SEARCH REPORT

| International application No. |
| --- |
| PCT/JP2008/003012 |

**Box No. II   Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III   Observations where unity of invention is lacking (Continuation of item 3 of first sheet)**

This International Searching Authority found multiple inventions in this international application, as follows:
  The inventions of claims 1, 2, 6, 9, 10, 14, 17, 18, 22 relate to the adjustment of the size of an encryption area.
The inventions of claims 3, 4, 7, 11, 12, 15, 19, 20, 23 relate to the addition of the size information of the encryption area.
The inventions of claims 5, 8, 13, 16, 21, 24 relate to the transmission of the size information of the encryption area.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
   Claims 1, 2, 6, 9, 10, 14, 17, 18, 22

**Remark on Protest**
the
☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007143301 A